# EUROPÄISCHE PATENTSCHRIFT

(11) **EP 0 616 833 B1**
(45) Veröffentlichungstag und Bekanntmachung des Hinweises auf die Patenterteilung: **28.08.1996**
(21) Anmeldenummer: 94104587.4
(22) Anmeldetag: 23.03.1994
(51) Int. Cl.: B01D 46/24, F01N 3/02

(54) **Russfilter für Dieselmotoren**
Soot filter for diesel engines
Filtre à suie pour moteurs diesel

(30) Priorität: 24.03.1993 DE 4309478
(43) Veröffentlichungstag der Anmeldung: 28.09.1994
(73) Patentinhaber: ERNST APPARATEBAU GmbH & Co., D-58099 Hagen (DE)
(72) Erfinder: Weber, Wolfgang, Dr., D-42655 Solingen (DE)
(74) Vertreter: COHAUSZ HASE DAWIDOWICZ & PARTNER

(56) Entgegenhaltungen:
- EP-A- 0 395 840
- EP-A- 0 442 318
- EP-A- 0 446 422
- DE-A- 4 213 822

## Beschreibung

Die Erfindung betrifft einen Rußfilter für Dieselmotoren mit mehreren parallel nebeneinander in einem Filterraum angeordneten rohrförmigen Filterkerzen, durch deren Wandung von außen nach innen das Abgas hindurchtritt und der Ruß sich an der Rohraußenwand ablagert, um dort nach Bildung einer Schicht durch einen Brenner abgebrannt zu werden, wobei die Abgase von der Brennkammer in den Filterraum durch Eintrittsöffnungen gelangen, die in einer die Brennkammer von dem Filterraum trennenden Trennwand angeordnet sind und zwischen den Filterkerzen liegen.

Bei solchen Rußfiltern hat es sich gezeigt, daß die auf die Rußfilteraußenseite abgesetzte Rußschicht nicht gleichmäßig durch den Brenner abgebrannt wird. Insbesondere die auf den weiter hinten und außen liegenden Filterkerzen abgesetzten Rußschichten werden in den Bereichen, die vom Brenner weiter entfernt liegen ungenügend abgebrannt.

Aufgabe der Erfindung ist es, einen Rußfilter der eingangs genannten Art so zu verbessern, daß die auf den Filterkerzen befindlichen Rußschichten gleichmäßig und möglichst vollständig abgebrannt werden.

Diese Aufgabe wird erfindungsgemäß dadurch gelöst, daß in einem insbesondere mittleren Bereich des Filterraums ein von Filterkerzen und Hohlprofilen freier, zu den Filterkerzen paralleler Freiraum ist, der als Längskanal einen Querschnitt aufweist, dessen kleinster Durchmesser größer ist als der Außendurchmesser einer Filterkerze und daß die Abgaseintrittsöffnung in dem Freiraum einen größeren Querschnitt aufweist als die Querschnitte der übrigen Eintrittsöffnungen.

In diesem mittigen Freiraum (Längskanal) werden die Flammgase weit und tief in den Filterraum geführt, so daß ein gleichmäßiger Abbrand der auf den Filterkerzen befindlichen Rußschichten gelingt. Der Rußfilter wird damit optimal genutzt und die Beladezeiten können verlängert werden, d.h. die zeitlichen Abstände zwischen zwei Abbränden können größer gewählt werden. Es erhöht sich damit auch die Lebensdauer des Rußfilters. Hierbei ist die Konstruktion besonders einfach, preiswert und platzsparend. Vorzugsweise wird vorgeschlagen, daß der Freiraum seitlich durch Filterkerzen und an beiden Stirnseiten durch die Stirnwände des Filterraumes begrenzt ist.

Ein Ausführungsbeispiel der Erfindung ist in den Zeichnungen in einem koaxialen Längsschnitt dargestellt und wird im folgenden näher beschrieben. Es zeigen:

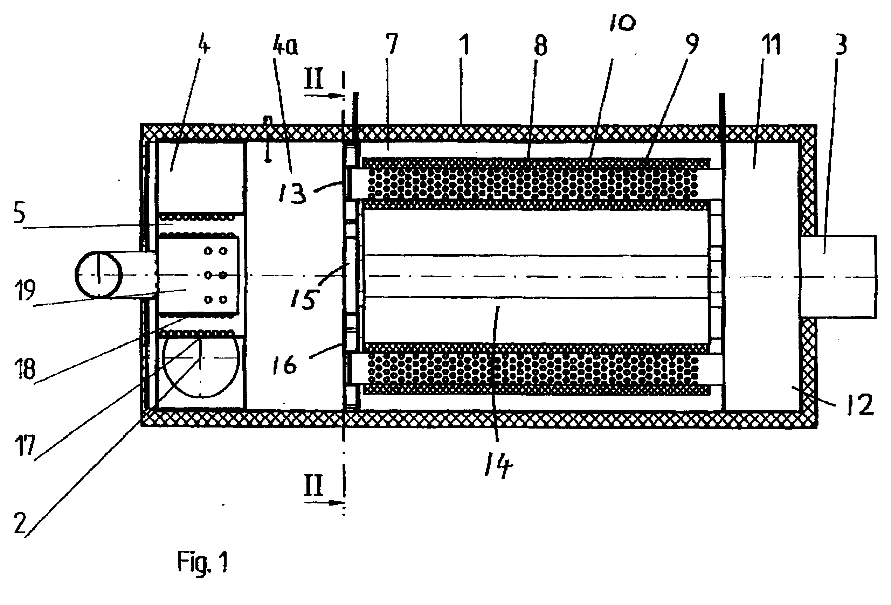

- Figur 1:: Einen koaxialen Längsschnitt und

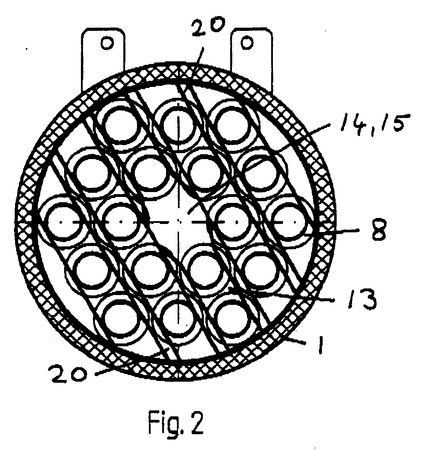

- Figur 2:: einen Querschnitt nach II-II in Figur 1.

Der Rußfilter weist ein Gehäuse 1 auf, mit einem seitlichen tangential angeordneten Einlaß 2 und einem koaxial angeordnetem Auslaß 3. Der Einlaß führt in einen Ringraum 4, der einen Brenner 19 umgibt. Der Brennerinnenraum 19 ist von einem zylindrischen koaxialen gelochten Ringblech 18 umgeben, das wiederrum von einem koaxialen gelochten zweiten Ringblech 17 umgeben ist um einen zweiten Ringraum 5 zu bilden. Die vom Brenner ausgehenden Flammgase werden in den Filterraum 7 geführt, in dem sich eine größere Anzahl von Filterkerzen 8 parallel zueinander und Achsparallel zum Gehäuse 1 erstrecken.

Die Filterkerzen 8 sind im dargestellten Ausführungsbeispiel Tiefenfilter mit keramischen Wicklungen 9 auf gelochten Metallrohren 10. Die Rohre 10 sind auf dem, dem Brenner zugekehrtem Ende verschlossen und münden mit den gegenüberliegenden Enden in einem Sammelraum 11, der von einem Schalldämpfer 12 umgeben sein kann und zu dem Auslaß 3 führt.

Die Abgase des Dieselmotors gelangen durch den Einlaß 2 in den Ringraum 4 und von dort über den Ringraum 5 und über eine, Brennkammer und Filterraum voneinander trennende, gitterförmige Trennwand 16 in den Filterraum 7. Sie durchströmen den Filterraum 7 und durchdringen die zylindrischen Wände der Filterkerzen 8, um danach durch das Innere der Filterkerzen 8 hindurch in den Sammelraum 11 und zum Auslaß 3 zu strömen. Hierbei setzt sich der in den Abgasen befindliche Ruß in den keramischen Wicklungen 9 und an der Außenseite als eine Schicht ab, die in der Zeichnung nicht dargestellt ist.

Um die Gase hindurchlassen zu können, weist die Trennwand 16 mehrere parallele Stäbe 20 auf, zwischen denen die Enden der Kerzen frei gelagert sind, wobei die Zwischenräume 13 zwischen den Kerzen verhältnismäßig kleine Zwickel sind, die in den Bereichen zwischen den Filterkerzen 8 liegen. Im mittleren Bereich des Filterraums 7 besteht ein koaxialer Freiraum (Längskanal) 14, der bis an das hintere Ende des Filterraums reicht und dessen kleinster Durchmesser größer ist als der Außendruchmesser einer Filterkerze. Dieser Freiraum 14 kann dadurch gebildet werden, daß an dieser Stelle eine mittlere Filterkerze weggelassen wird.

Im Bereich des Freiraums 14 weist die Trennwand 16 eine Gasdurchtrittsöffnung 15 auf, deren Querschnitt und Durchmesser größer ist als bei den übrigen, zwischen den Filterkerzen liegenden Öffnungen 13 der Trennwand 16. Durch die Öffnung 15 und den Freiraum 14 reichen die Flammgase des Brenners weit in den Filterraum 7 hinein.

## Patentansprüche

1. Rußfilter für Dieselmotoren mit mehreren parallel nebeneinander in einem Filterraum angeordneten rohrförmigen Filterkerzen (8), durch deren Wandung von außen nach innen das Abgas hindurchtritt und der Ruß sich an der Rohraußenwand ablagert, um dort nach Bildung einer Schicht durch einen Brenner 19 abgebrannt zu werden, wobei die Abgase von der Brennkammer in den Filterraum durch eine, insbesondere gitterförmige, Trennwand (16) gelangen, **dadurch gekennzeichnet,**
- daß in einem, insbesondere mittleren, Bereich des Filterraums ein von Filterkerzen und Hohlprofilen freier, zu den Filterkerzen paralleler Freiraum (14) ist, der als Längskanal einen Querschnitt aufweist, dessen kleinster Durchmesser größer ist als der Außendurchmesser einer Filterkerze (8) und
- daß die Abgaseintrittsöffnung (15) in der Trennwand (16) zum Freiraum (14) einen größeren Querschnitt aufweist als die Querschnitte der zwischen den Filterkerzen liegenden übrigen Eintrittsöffnungen (13) der Trennwand.

2. Rußfilter nach Anspruch 1 , **dadurch gekennzeichnet,** daß der Freiraum (14) seitlich durch Filterkerzen (8) und an beiden Stirnseiten durch die Stirnwände des Filterraumes begrenzt ist.

## Claims

1. A soot filter for diesel engines, having a number of tubular filter cartridges (8) which are disposed parallel one beside the other in a filter space and through whose wall the exhaust gas passes inwardly, the soot being deposited on the tube outside wall where, after the formation of a layer, it is burnt off by a burner (19), the exhaust gases passing from the combustion chamber into the filter space via a more particularly grid-shaped partition (16), characterized in that
- there is provided in a more particularly central zone of the filter space a free space (14), free from filter cartridges and hollow sections and parallel with the filter cartridges, which is a longitudinal channel having a cross-section whose smallest diameter is larger than the external diameter of a filter cartridge (8), and
- the exhaust gas inlet opening (15) in the partition (16) to the free space (14) has a larger cross-section than the cross-sections of the other inlet openings (13) of the partition situated between the filter cartridges.

2. A soot filter according to claim 1, characterized in that the free space (14) is bounded laterally by filter cartridges (8) and at both end faces by the end walls of the filter space.
channel) 14 which extends as far as the rear end of the filter space and whose smallest diameter is larger than the external diameter of a filter cartridge. The free space 14 can be formed by the omission of a central filter cartridge at that place.
In the zone of the free space 14 the partition 16 has a gas passage opening 15 whose cross-section and diameter are larger than in the case of the other opening 13 with which the partition 16 is formed between the filter cartridges. Through the opening 15 and the free space 14 the flame gases of the burner extend far into the filter space 7.

## Revendications

1. Filtre à suies pour moteurs Diesel avec plusieurs filtres-bougies (8) tubulaires disposées parallèlement les unes contre les autres dans un volume de filtre, à travers la paroi desquelles les gaz d'échappement pénètrent de l'extérieur vers l'intérieur et les suies se déposent sur la paroi extérieure du tube pour y être brûlées par un brûleur (19) après formation d'une couche, les gaz d'échappement arrivant dans le volume de filtre depuis la chambre de combustion à travers une paroi séparatrice (16) en particulier en forme de grillage,
caractérisé en ce
- que, dans une zone, en particulier médiane, du volume de filtre, se trouve un volume libre (14) parallèle aux filtres-bougies, sans filtres-bougies ni profilés creux, qui présente, sous forme de canal longitudinal, une section transversale dont le plus petit diamètre est supérieur au diamètre extérieur d'un filtre-bougie (8) et
- que l'ouverture d'entrée des gaz d'échappement (15), dans la paroi séparatrice (16), vers le volume libre (14) présente une section transversale plus grande que les sections transversales des autres ouvertures d'entrée (13) de la paroi séparatrice se trouvant entre les filtresbougies.

2. Filtre à suies selon la revendication 1,
caractérisé en ce que le volume libre (14) est bordé latéralement par des filtres-bougies (8) et, sur les deux faces frontales, par les parois frontales du volume de filtre.
